# EUROPÄISCHE PATENTSCHRIFT

(11) **EP 0 955 484 B1**
(45) Veröffentlichungstag und Bekanntmachung des Hinweises auf die Patenterteilung: **02.03.2005**
(21) Anmeldenummer: 99890100.3
(22) Anmeldetag: 24.03.1999
(51) Int. Cl.: F16F 15/121, F16F 15/133, F16D 3/56

(54) **Drehschwingungsdämpfer bzw. drehelastische Kupplung**
Torsional vibration damper, torsionally elastic coupling
Amortisseur de vibrations torsionelles, accouplement torsionel élastique

(30) Priorität: 08.05.1998 AT 77698
(43) Veröffentlichungstag der Anmeldung: 10.11.1999
(73) Patentinhaber: Ellergon Antriebstechnik GmbH, 5300 Hallwang/Salzburg (AT)
(72) Erfinder: Martinek, Felix, Dipl.-Ing., 5302 Henndorf (AT)
(74) Vertreter: Hübscher, Helmut, Dipl.-Ing.

(56) Entgegenhaltungen:
- GB-A- 2 111 169
- US-A- 3 996 767
- US-A- 4 104 891
- US-A- 5 364 308

## Beschreibung

Die Erfindung bezieht sich auf einen Drehschwingungsdämpfer bzw. eine drehelastische Kupplung mit einem Innenteil und einem Außenteil und radialen Blattfederpaketen zwischen Innen- und Außenteil, wobei die Blattfederpakete jeweils zwei Blattfedern umfassen und einerends zwischen Zwischenstücken eingespannt und am Außenteil befestigt sind und andernends in Axialnuten des Innenteils eingreifen, siehe US-A-4 104 891.

Bei diesen Dämpfern bzw. Kupplungen dienen die Blattfederpakete zur Drehmomentenübertragung und ermöglichen gleichzeitig auf Grund ihrer federelastischen Eigenschaften eine Beeinflussung der auftretenden Drehschwingungen. Die Federpakete sind im Außenteil fest eingespannt, greifen aber zum Ausgleich auftretender Relativbewegungen zwischen Innen- und Außenteil mit ihren inneren Enden nur lose in die Axialnuten des Innenteils ein, wobei hier die Krafteinleitung über die Nutenflanken und die anliegenden Federenden erfolgt. Beim Auftreten von Drehschwingungen kommt es zu Relativbewegungen sowohl zwischen den Nutenflanken und den anliegenden Federenden, als auch zwischen den einzelnen Blattfedern der Federpakete, wobei die unmittelbar aneinander anliegenden Blattfedern eines Federpaketes auf Grund der Drehschwingungen einer Wechselbiegebelastung unterworfen werden, was die Belastbarkeit der Federn und deren Lebensdauer beeinträchtigt und in den Berührungsbereichen zu erheblichen Verschleißerscheinungen führt. Um diese Reibungs- und Verschleißverhältnisse zwischen den Blattfedern zu verbessern, wurde auch schon vorgeschlagen, die einzelnen Blattfedern durch Einlageplatten aus Bronze od. dgl. Gleitmaterial voneinander zu trennen, welche Einlageplatten sich im wesentlichen über die gesamte Federblattlänge erstrecken und eine gewisse Verbesserung des Reibungs- und Verschleißverhaltens mit sich bringen, die Wechselbelastung der Blattfedern aber nicht verringern können und auch kaum zu einer Verlängerung der Standzeit und einer erhöhten Federnutzung beitragen.

Der Erfindung liegt daher die Aufgabe zugrunde, einen Drehschwingungsdämpfer bzw. eine drehelastische Kupplung der eingangs geschilderten Art zu schaffen, der bzw. die mit einfachen Mitteln eine Steigerung des Federnutzungsgrades bei gleichzeitiger Verringerung der Reibungskräfte und der Verschleißgefahr erlaubt.

Die Erfindung löst diese Aufgabe dadurch, daß die beiden Blattfedern der Blattfederpakete vom Einspannbereich bis zu den in die Axialnuten eingreifenden Enden unter Einhaltung eines gegenseitigen freien Bewegungsspielraumes radial einwärts ragen.

Auf Grund des freien Bewegungsspielraumes zwischen den einzelnen Blattfedern wird bei einer Relatiwerdrehung zwischen Innen- und Außenteil immer nur die eine an den Nutenflanken anliegende Blattfeder auf Biegung belastet, die andere Blattfeder aber hebt von der Nutenflanke ab und bleibt belastungsfrei. Drehschwingungen verursachen demnach in Abhängigkeit von der jeweiligen Schwingungsrichtung eine Biegung der einen Feder und dann eine Biegung der anderen Feder, so daß die einzelnen Blattfedern immer nur einer anschwellenden Biegebelastung, nie aber einer Wechselbiegebelastung unterworfen sind. Da außerdem die beiden einwärts ragenden Blattfedern ohne gegenseitige Berührung bleiben, treten zwischen ihnen keine Reibungskräfte auf und auch die Verschleißerscheinungen beschränken sich auf den Eingriffsbereich der Federenden in die Axialnuten. Auf Grund der fehlenden Wechselbiegebeanspruchung der Blattfedern können die Federn selbst wirkungsvoller genutzt werden und erlauben die Aufnahme bzw. Übertragung größerer Kräfte und führen damit zu einer vergleichsweise kleineren Bauweise.

Um den freien Bewegungsspielraum zwischen den Blattfedern sicherzustellen, können die Blattfedern der Länge nach vom Einspannbereich aus einen entsprechend keilförmig sich verjüngenden Querschnitt aufweisen, die beiden Blattfedern der Blattfederpakete können aber auch jeweils durch sich lediglich über den Einspannbereich erstreckende Einlageplatten voneinander getrennt sein. Diese Einlageplatten dienen dann als Abstandhalter zwischen den Blattfedern und erlauben es, die Größe des gegenseitigen Federabstandes an unterschiedliche Gegebenheiten anzupassen.

Sind weiters zwischen den Zwischenstücken und den Blattfedern der Blattfederpakete sich lediglich über den Einspannbereich erstreckende Einlageplatten eingesetzt, läßt sich durch diese Einlageplatten der jeweilige Abstand zwischen den Blattfedern und den meist zur Ausbildung von Drosselspalten bis knapp zur Innenteilmantelfläche vorragenden Zwischenstücken beeinflussen und auch bei einem durchgehend radialen Verlauf der benachbarten Seitenflächen von Zwischenstücken und Blattfedern für den erforderlichen Freiraum zwischen Zwischenstücken und Blattfedern sorgen.

In der Zeichnung ist der Erfindungsgegenstand näher veranschaulicht, und zwar zeigen
- Fig. 1: einen Ausschnitt eines erfindungsgemäßen Dämpfers bzw. einer erfindungsgemäßen Kupplung im Querschnitt und die
- Fig. 2 und 3: Ausschnitte zweier abgeänderter Ausführungsbeispiele eines erfindungsgemäßen Dämpfers bzw. einer erfindungsgemäßen Kupplung.

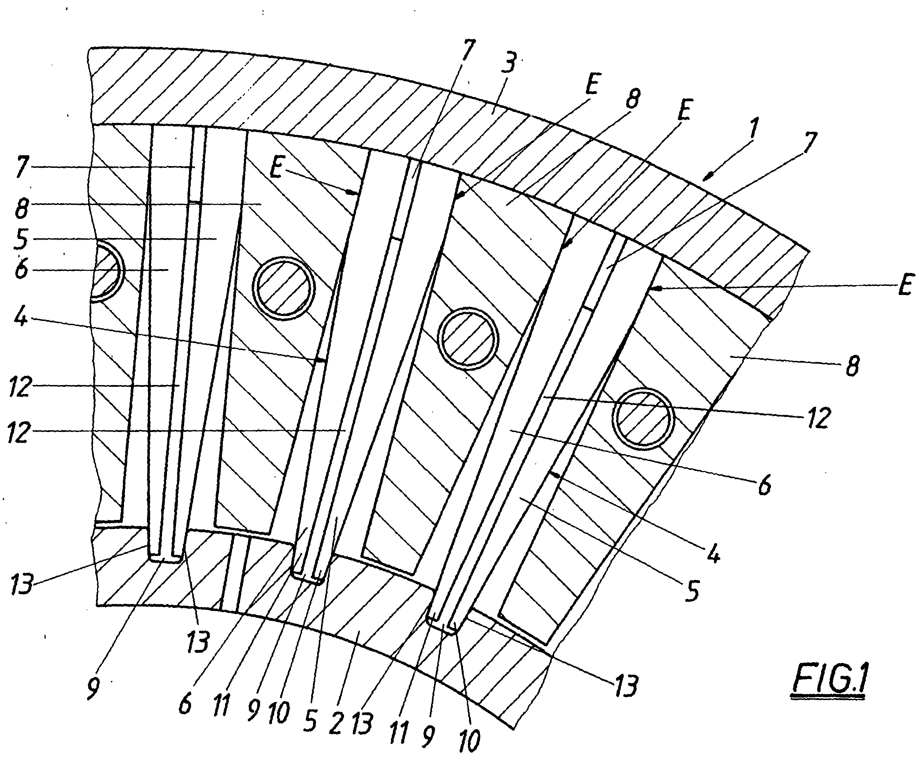

Ein Drehschwingungsdämpfer bzw. eine drehelastische Kupplung 1 umfaßt einen Innenteil 2, einen Außenteil 3 und radiale Blattfederpakete 4 zwischen Innen- und Außenteil 2, 3 zur Drehmomentübertragung. Die Blattfederpakete 4 bestehen dabei jeweils aus zwei einzelnen Blattfedern 5, 6, die gemäß dem Ausführungsbeisiel nach Fig. 1 voneinander durch eine Einlageplatte 7 getrennt sind. Die Blattfederpakete 4 sind einerends zwischen Zwischenstücken 8 eingespannt und am Außenteil 3 befestigt und andernends greifen sie in Axialnuten 9 des Innenteils 2 ein. Die Einlageplatten 7 erstrecken sich allerdings lediglich über den Einspannbereich E der Blattfederpakete 4 und die Blattfedern 5, 6 ragen frei vom Einspannbereich radial einwärts bis zu den in die Axialnuten 9 eingreifenden Enden 10, 11, wobei ein gegenseitiger Bewegungsspielraum 12 eingehalten wird. Die Blattfedern 5, 6 der Blattfederpakete 4 wirken somit bei der Drehmomentenübertragung wie Einzelfedern, wobei bei einer Relatiwerdrehung des Außenteiles 3 gegenüber dem Innenteil 2 im Uhrzeigersinn nur jeweils die Blattfedern 5 mit ihren Enden 10 an den Nutenflanken 13 anliegen, die Enden 11 der Blattfedern 6 aber von den Nutenflanken 13 abheben, bei einer Relativverdrehung gegen den Uhrzeigersinn dann umgekehrt die Blattfedern 6 anliegen und die Blattfedern 5 abheben, was abwechselnd jeweils immer nur die Blattfedern 5 bzw. die Blattfedern 6 auf Biegung belastet. Es gibt keine Wechselbiegebelastung der Blattfedern, es gibt wegen des freien Bewegungsspielraumes 12 zwischen den einzelnen Blattfedern keine Reibungskräfte und damit in diesem Bereich auch keine Verschleißerscheinungen. Die lediglich auf schwellende Biegung beanspruchten Blattfedern lassen sich in ihren Federungseigenschaften optimal nutzen und erlauben daher auch eine vergleichsweise kleinere Bauweise des Dämpfers bzw. der Kupplung.

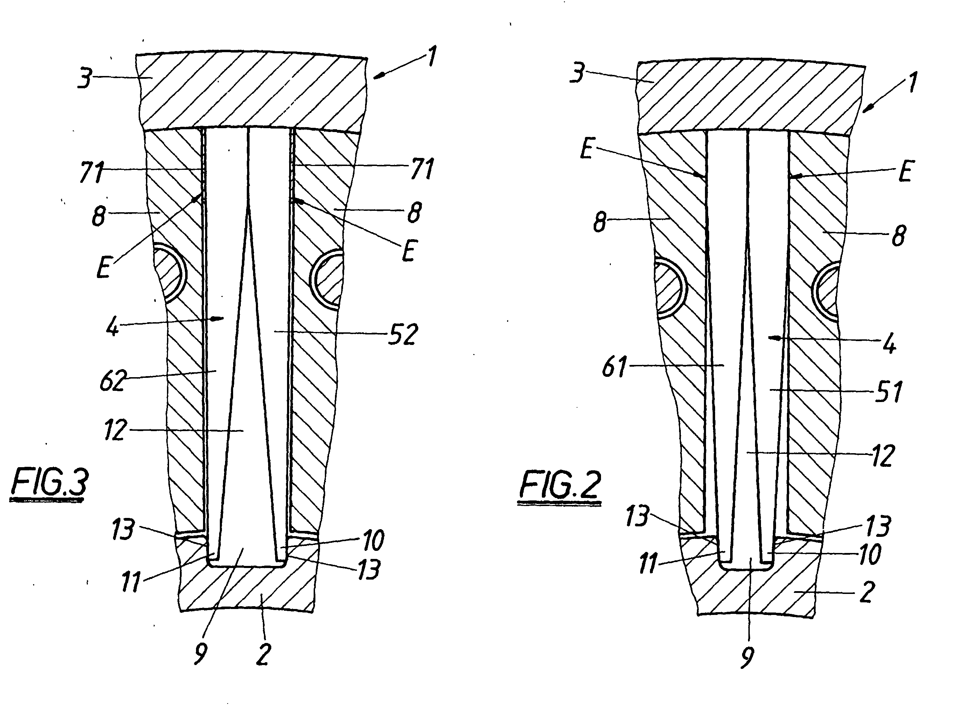

Um den gewünschten Bewegungsspielraum 12 für die Blattfedern zu erreichen, können, wie in Fig. 2 angedeutet, die Blattfedern 51, 61 der Länge nach vom Einspannbereich E aus einen radial einwärts sich keilförmig verjüngenden Querschnitt aufweisen, so daß aufgrund der Federquerschnitte auch ohne Einlageplatten die zur Vermeidung von Wechselbiegebelastungen erforderliche Bewegungsfreiheit der Blattfedern sichergestellt ist, wobei durch die Doppelkeilform der Querschnitte auch den Zwischenstücken 8 gegenüber für den nötigen Freiraum gesorgt wird.

Gemäß dem Ausführungsbeispiel nach Fig. 3 sind die Blattfedern 52, 62 der Blattfederpakete 4 ebenfalls im Einspannbereich E unmittelbar zusammengespannt, doch weisen sie vom Einspannbereich E aus der Länge nach nur einen einfach sich keilförmig verjüngenden Querschnitt auf, wobei die Keilflächen der Blattfedern einander zugekehrt sind und den Bewegungsspielraum 12 zwischen den Blattfedern bilden. Um hier zwischen den durchgehend radial verlaufenden, einander benachbarten Seitenflächen der Blattfedern 52, 62 und der Zwischenstücke 8 den die Federbewegung erfordernden Freiraum zu erhalten, sind zwischen den Zwischenstücken 8 und den Blattfedern 52, 62 Einlageplatten 71 eingesetzt, die sich wiederum lediglich über den Einspannbereich E erstrecken.

## Patentansprüche

1. Drehschwingungsdämpfer bzw. drehelastische Kupplung (1) mit einem Innenteil (2) und einem Außenteil (3) und radialen Blattfederpaketen (4) zwischen Innen- und Außenteil, wobei die Blattfederpakete (4) jeweils zwei Blattfedern (5, 6) umfassen und einerends zwischen Zwischenstücken (8) eingespannt und am Außenteil (3) befestigt sind und andernends in Axialnuten (9) des Innenteils (2) eingreifen, **dadurch gekennzeichnet, daß** die beiden Blattfedern (5, 6; 51, 61; 52, 62) der Blattfederpakete (4) vom Einspannbereich (E) bis zu den in die Axialnuten (9) eingreifenden Enden (10, 11) unter Einhaltung eines gegenseitigen freien Bewegungsspielraumes (12) radial einwärts ragen.

2. Drehschwingungsdämpfer bzw. Kupplung nach Anspruch 1, **dadurch gekennzeichnet, daß** die beiden Blattfedern (5, 6) der Blattfederpakete (4) jeweils durch sich lediglich über den Einspannbereich (E) erstreckende Einlageplatten (7) voneinander getrennt sind.

3. Drehschwingungsdämpfer bzw. Kupplung nach Anspruch 1 oder 2, **dadurch gekennzeichnet, daß** zwischen den Zwischenstücken (8) und den Blattfedern (52, 62) der Blattfederpakete (4) sich lediglich über den Einspannbereich (E) erstreckende Einlageplatten (71) eingesetzt sind.

## Claims

1. A torsional vibration damper or torsionally elastic coupling (1) with an inner part (2) and an outer part (3) and radial leaf spring assemblies (4) between the inner and outer parts, wherein the leaf spring assemblies (4) each comprise two leaf springs (5, 6) and are clamped between intermediate members (8) at one end and fixed to the outer part (3) whereas the other ends engage in axial grooves (9) of the inner part (2), **characterised in that** the two leaf springs (5, 6; 51, 61; 52, 62) of the assemblies (4) project radially inwards from the clamped region (E) up to the ends (10, 11) engaging in the axial slots (9) while maintaining a clearance (12) for free movement in between.

2. A torsional vibration damper or coupling according to claim 1, **characterised in that** the two leaf springs (5, 6) of the assemblies (4) are each separated from one another by stiffening plates (7) extending only over the clamped region (E).

3. A torsional vibration damper or coupling according to claim 1 or 2, **characterised in that** stiffening plates (71) extending only over the clamped region (E) are inserted between the intermediate members (8) and the leaf springs (52, 62) of the assemblies (4).

## Revendications

1. Amortisseur de vibrations torsionelles, respectivement accouplement à élasticité en rotation (1), avec une partie intérieure (2) et une partie extérieure (3) et des paquets de ressorts à lames (4) radiaux, entre la partie intérieure et la partie extérieure, les paquets de ressorts à lames (4) comprenant chacun deux ressorts à lames (5, 6) et, à une extrémité, étant enserrés entre des pièces intermédiaires (8) et fixés sur la partie extérieure (3) et, à l'autre extrémité, s'engageant dans des rainures axiales (9) de la partie intérieur (2), **caractérisé en ce que** les deux ressorts à lames (5, 6; 51, 61; 52, 62) des paquets de ressorts à lames (4) pénètrent radialement vers l'intérieur de la zone d'enserrement (E) jusqu'aux extrémités (10, 11) s'engageant dans les rainures axiales (9), en respectant un espace de jeu de déplacement (12) libre mutuel.

2. Amortisseur de vibrations torsionelles, respectivement accouplement à élasticité en rotation selon la revendication 1, **caractérisé en ce que** les deux ressorts à lames (5, 6) des paquets de ressorts à lames (4) sont chacun séparés l'un de l'autre par des plaques d'insertion (7) s'étendant uniquement sur la zone d'insertion (E).

3. Amortisseur de vibrations torsionelles, respectivement accouplement à élasticité en rotation selon la revendication 1 ou 2, **caractérisé en ce qu'**entre les pièces intermédiaires (8) et les ressorts à lames (52, 62) des paquets de ressort à lames (4) sont insérées des plaques d'insertion (71), s'étendant uniquement sur la zone d'insertion (E).
